# EUROPÄISCHE PATENTSCHRIFT

(11) **EP 1 627 159 B1**
(45) Veröffentlichungstag und Bekanntmachung des Hinweises auf die Patenterteilung: **29.11.2006**
(21) Anmeldenummer: 04733540.1
(22) Anmeldetag: 18.05.2004
(51) Int. Cl.: F16D 55/226, F16D 65/14, F16D 65/00

(54) **PNEUMATISCH ODER ELEKTROMOTORISCH BETÄTIGBARE SCHEIBENBREMSE**
PNEUMATICALLY OR ELECTROMOTIVELY OPERABLE DISC BRAKE
FREIN A DISQUE A ACTIONNEMENT PAR VOIE PNEUMATIQUE OU PAR MOTEUR ELECTRIQUE

(30) Priorität: 19.05.2003 DE 10322833; 07.07.2003 DE 10330633
(43) Veröffentlichungstag der Anmeldung: 22.02.2006
(73) Patentinhaber: KNORR-BREMSE SYSTEME FÜR NUTZFAHRZEUGE GMBH, 80809 München (DE)
(72) Erfinder: FISCHER, Rudolf, 85435 Erding (DE); KNOOP, Dietmar, 82067 Ebenhausen (DE)
(74) Vertreter: Mattusch, Gundula
(86) Internationale Anmeldenummer: PCT/EP2004/005327
(87) Internationale Veröffentlichungsnummer: WO 2004/102023

(56) Entgegenhaltungen:
- EP-A- 1 160 476
- DE-A- 19 511 287
- US-A- 3 512 497

## Beschreibung

Die vorliegende Erfindung betrifft eine pneumatisch oder elektromotorisch betätigbare Schreibenbremse gemäß dem Oberbegriff des Anspruchs 1.

Der prinzipielle Aufbau einer derartigen Scheibenbremse ist beispielsweise aus der DE 195 15 063 C2 bekannt.

Dabei weist die Zuspanneinrichtung zwei Stellspindeln auf, die im Bremssattel verschieblich gelagert sind und die an ihrem der Bremsscheibe zugewandten Ende jeweils ein Druckstück tragen, an dem ein im Funktionsfall die Bremsscheibe kontaktierender Bremsbelag befestigt ist. Die Bremsbeläge sind im Bremsträger verankert und werden mit den Druckstücken mit Kraft beaufschlagt.

Um den Innenraum des Bremssattels sowie die Stellspindeln vor Verschmutzungen zu schützen, ist an dem jeweiligen Druckstück ein Balg in Form eines Faltenbalges befestigt, der andererseits an einer Verschlußplatte festgelegt ist, durch die der Bremssattel verschlossen ist. Insofern ist die Verschlußplatte integraler Bestandteil des Bremssattels. Er kann auch direkt am Bremssattel angreifen, wenn keine Verschlussplatte vorgesehen ist.

Gattungsgemäße Scheibenbremsen, also üblicherweise in Nutzfahrzeugen montiert, unterliegen im Betriebsfall einer erheblichen Beanspruchung, insbesondere hinsichtlich einer thermischen Belastung. Die beim Bremsen entstehende Reibungswärme wird in einem nennenswerten Umfang auf die einzelnen Bauteile der Scheibenbremse übertragen, insbesondere auch auf den als Dichtelement fungierenden Balg des jeweiligen Druckstücks.

Die bislang eingesetzten Bälge bestehen aus einem Kunststoff, vorzugsweise aus Silikon. Es wäre allerdings wünschenswert, ein noch geeigneteres Material für diese Bälge einzusetzen, um die Wartungsintervalle hinsichtlich des Balges zu verlängern.

Es ist auch wünschenswert, ein mechanisch belastbareres Material einzusetzen, das noch unempfindlicher gegen Verschmutzungen und Beschädigungen ist, wie sie beispielsweise durch Belagabrieb, im Fahrbetrieb umherfliegende Steine, Sand oder dergleichen entstehen können.

Zwar ist schon versucht worden, die mechanische Belastung durch eine über den Balg gestülpte Umhüllung, beispielsweise in Form einer Schraubenfeder aus Metall, zu reduzieren bzw. auszuschließen, jedoch führt dies aufgrund eines Wärmestaus zu einer zusätzlichen thermischen Belastung des Balges, so daß diese Lösung ganz und gar unbefriedigend ist.

Der vorliegenden Erfindung liegt daher die Aufgabe zugrunde, eine Scheibenbremse der gattungsgemäßen Art so weiter zu entwickeln, daß ihre Standzeit erhöht und Reparaturkosten dadurch gesenkt werden.

Diese Aufgabe wird durch eine Scheibenbremse mit den Merkmalen des Anspruchs 1 gelöst. Danach besteht der Balg aus Metall.

Eine derart ausgebildete Scheibenbremse zeichnet sich insbesondere dadurch aus, daß ihre Standzeit wesentlich erhöht ist, d. h., die Reparaturzeiträume, nach denen ein verschleißbedingtes Auswechseln der Bälge erforderlich ist, sind wesentlich länger als bisher. Daraus ergeben sich naturgemäß Kostenvorteile, da zum einen die Stillstandzeiten des Nutzfahrzeuges reduziert und zum anderen Montage- und Materialkosten verringert werden.

Nach einer vorteilhaften Weiterbildung der Erfindung ist vorgesehen, den Balg als Faltenbalg z.B. in Form eines Lamellen- oder Wellenbalges auszubilden. Zumindest sollte dabei eine, vorzugsweise aber mehrere Wellung(en) oder Faltung(en) realisiert werden, um eine genügende Federwirkung zu sichern.

Metallfaltenbälge sind zwar an sich bekannt, so aus allgemeinen Lehrbüchern wie Roloff/Matek: "Maschinenelemente", 14. Auflage, S. 632, 633. Auch aus der DE 195 11 287 A1 ist zwar ein Metallfaltenbalg 45 bekannt. Der dortige Metallfaltenbalg dient allerdings in keiner Weise zur Abdichtung, da zu diesem Zweck in der Anmeldung noch ein weiterer Faltenbalg aus einem Elastomer mit dem Bezugszeichen vorhanden ist. Der Faltenbalg aus Metall dient vielmehr dazu, eine torsionsfeste Verbindung zur Übertragung von aus der Gewindespindel ausgehenden Zugspannkraft resultierenden Torsionsmomenten zwischen der Kraftübertragungsplatte mit Fortsatz und der Gewindespindel herzustellen. Eine Verbindung zum Bremssattel oder zu einem mit dem Bremssattel verbundenen Teil wie einem eine Öffnung im Bremssattel verschließenden Deckel ist hier nicht gegeben. In dieser Schrift wird also ein Metallfaltenbalg entgegen den Empfehlungen der Hersteller als Drehmoment übertragendes Element eingesetzt und nicht etwa als Verbindung zwischen einem Druckstück und einem Bremssattel oder einem mit dem Bremssattel verbundenen Teil zur Abdichtung des Inneren des Bremssattels.

Metallfaltenbälge sind auch aus der US 3 512 497 bekannt. Auch in dieser Schrift ist aber der Einsatz des Metallfaltenbalges als abdichtendes Element zwischen einem Bremssattel und einem Druckstück in keiner Weise vorgesehen.

An den Einsatz eines Metallfaltenbalges in erfindungsgemäßer Art wurde bisher nicht gedacht, vermutlich, da man glaubte, dass das Drehmoment, welches der Metallfaltenbalg aufgrund seiner Federwirkung zwischen Druckstück und Bremssattel jeweils auf die Stellspindeln ausübt, diesem Einsatz entgegensteht, insbesondere, da sich die Federwirkung und damit das Drehmoment mit zunehmendem Belagverschleiß und zunehmendem Ausfahren des Faltenbalges laufend verändern. Nach der Idee der Erfindung ist dieser Effekt aber überraschend durchaus beherrschbar, und zwar insbesondere, wenn der Faltenbalg derart ausgelegt ist, dass das durch die Federkraft des metallischen Faltenbalges erzeugte Gewindehaltemoment, welches der Faltenbalg auf die Stellspindeln ausübt, so gering ist, dass die Nachstellfunktion des Nachstellers auf die Nachstellspindeln dass die Nachstellfunktion des Nachstellers durch Verdrehen der Stellspindeln gewährleistet bleibt bzw. nicht oder nicht nennenswert bzw. nicht in praktisch erheblichem Maße beeinträchtigt wird. Nur wenn diese Bedingung erfüllt ist, bleibt die Funktion der Nachstellung in genügendem Maße gewährleistet. Bevorzugt ist die Federkraft kleiner als 1000 N, insbesondere kleiner als 800 N. Diese Kraftangaben beziehen sich auf zwei Faltenbälge. Pro Faltenbalg gilt daher bevorzugt: Federkraft < 500N, insbesondere < 400 N.

Es ist auch denkbar, daß der Faltenbalg derart ausgelegt ist, dass er bei unverschlissenen Bremsbelägen und bei verschlissenen Bremsbelägen als Zugfeder (oder als Druckfeder) auf die Druckspindeln wirkt.

Vorzugsweise wird der Faltenbalg aus einem nichtrostenden Metall hergestellt. Hier bietet sich Leichtmetall oder insbesondere nichtrostender Stahl an. Hergestellt wird der Faltenbalg insbesondere unter Einsatz eines Laserschweißverfahrens.

Neben der hohen thermischen Belastbarkeit sowie der mechanischen, zeichnet sich ein solcher Balg dadurch aus, daß er flüssigkeitsdicht und dauerhaft elastisch verformbar ist.

Letzteres erlaubt die Mehrfachverwendung des Balges, d. h., er ist auch bei mehreren Bremsbelagwechseln einsetzbar, wobei er nach erfolgter Erneuerung des Bremsbelages in seinen Ausgangszustand zurückverformt werden kann.

Da der neue Balg in seiner Formgebung und Konfiguration zweckmäßigerweise dem eines bekannten angepaßt wird, ist auch die theoretische Möglichkeit der Nachrüstung gegeben. Im Falle eines notwendigen Austausches kann damit der neue Balg eingesetzt werden. Der Metallbalg als Erstausrüstungsbestandteil ist natürlich an sich auch gegen einen neuen Metallbalg austauschbar.

Durch die Anpassung des neuen Balges an die Form des bislang eingesetzten sind auch die übrigen Bauteile der Scheibenbremse, an die der Balg anschließbar ist, nicht notwendigerweise auch zu verändern. Vielmehr kann der neue Balg theoretisch bei entsprechender Anpassung auch in eine bestehende Scheibenbremse eingebaut werden, insbesondere in den vorhandenen Einbauraum. Es kann allerdings auch notwendig sein, die Einbaugegebenheit geringfügig zu modifizieren, da der Metallbalg i.allg. etwas länger baut als ein Silikonbalg.

Auch die Herstellung des neuen Balges gestaltet sich sehr einfach und kostengünstig, da auf bekannte Technologien zurückgegriffen werden kann, die vor allem unter dem Aspekt, daß es sich bei solchen Bälgen um Serienprodukte handelt, die in großen Stückzahlen verwendet werden, eine rationelle Fertigung zulassen.

Aufgrund der Dehn- (Zug- und Druck-)steifigkeit des Balges wird die mit dem Druckstück verbundene, im Bremssattel geführte und als Gewinderohr ausgebildete Stellspindel gegen unbeabsichtigtes Verdrehen durch Rütteln und dgl. gesichert, so daß auf eine bislang erforderliche Reibbremse zu diesem Zweck u.U. verzichtet werden kann, jedenfalls bei einer Auslegung als reine Druckfeder. U.U. kann der Balg auch mit einem Dichtringabschnitt zumindest an einem seiner Enden kombiniert werden.

Die Befestigung des Metallbalges am Druckstück kann durch Schweißen, Löten, Rollieren, Verquetschen, Verpressen mit oder ohne einen Preßring erfolgen oder durch Halten mittels einer am Druckstück festlegbaren Platte zur Thermoisolation.

Die Verbindung mit dem Bremssattel bzw. der angeschlossenen Verschlußplatte kann in gleicher Weise erfolgen, wobei die Verschlußplatte eine topfartige Vertiefung aufweisen kann, an deren Grund der Balg mit einem Ende befestigt ist, während das andere Ende mit dem Druckstück verbunden ist.

In diesem Fall erstreckt sich der Balg koaxial zur am Druckstück angeschlossenen Stellspindel.

Nach einer weiteren vorteilhaften Ausführungsform weist der Balg in seiner Ausgangsstellung bei unverschlissenen Bremsbelägen einen zumindest teilweise aufgrollten Mantel aufweist, derart, dass mit zunehmendem Belagverschleiß der abgerollte Bereich des Faltenbalges nach und nach aus dem aufgrollten Bereich heraus gestreckt wird. Bei einem Belagwechsel wird dann auch dieser "Einwegbalg" gegen einen neuen getauscht.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben. Es zeigt:
- Fig. 1: eine teilweise geschnittene Draufsicht auf eine Scheibenbremse,
- Fig.2, 3: jeweils verschiedene Ausführungsbeispiele von einem in einer Einzelansicht in einem Längsschnitt dargestellten Bauteil der Scheibenbremse,
- Fig 4a - 4c: jeweils unterschiedliche Befestigungsarten eines Balges am Bremssattel der Scheibenbremse,
- Fig 5a - 5c: jeweils verschiedene Befestigungsarten des Balges an einem Druckstück der Scheibenbremse;
- Fig..6a,b: Ausschnittsvergrößerungen der Scheibenbremse aus Fig. 1 in verschiedenen Betriebszuständen mit unverschlissenen und verschlissenen Belägen; und
- Fig. 7a - c: verschiedene Betriebszustände des Faltenbalges bei unterschiedlichem Belagverschleißzustand.

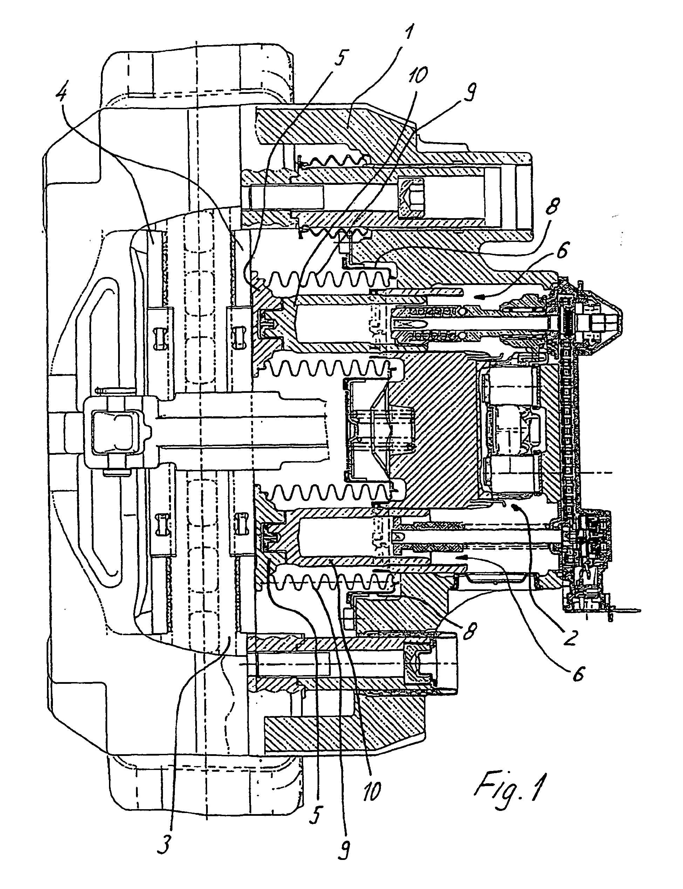

In der Figur 1 ist eine pneumatisch betätigbare Scheibenbremse dargestellt, die einen als Schiebesattel ausgebildeten Bremssattel 1 aufweist, der eine Bremsscheibe 3 in ihrem oberen Umfangsbereich umfaßt. Prinzipiell möglich ist auch eine elektromotorische Betätigung der Scheibenbremse.

Zu beiden Seiten der Bremsscheibe 3 sind Bremsbeläge 4 angeordnet, von denen jeweils einer an hier rechts dargestellten Druckstücken 5 befestigt ist oder anliegt, mit denen der zugeordnete Bremsbelag 4 gegen die Bremsscheibe 3 pressbar ist.

Hierzu ist eine drehhebelbetätigte Zuspanneinrichtung 2 vorgesehen, die in Verbindung mit den die Druckstücke 5 tragenden Stellspindeln 10 steht, die axial bewegbar im Bremssattel 1 geführt sind.

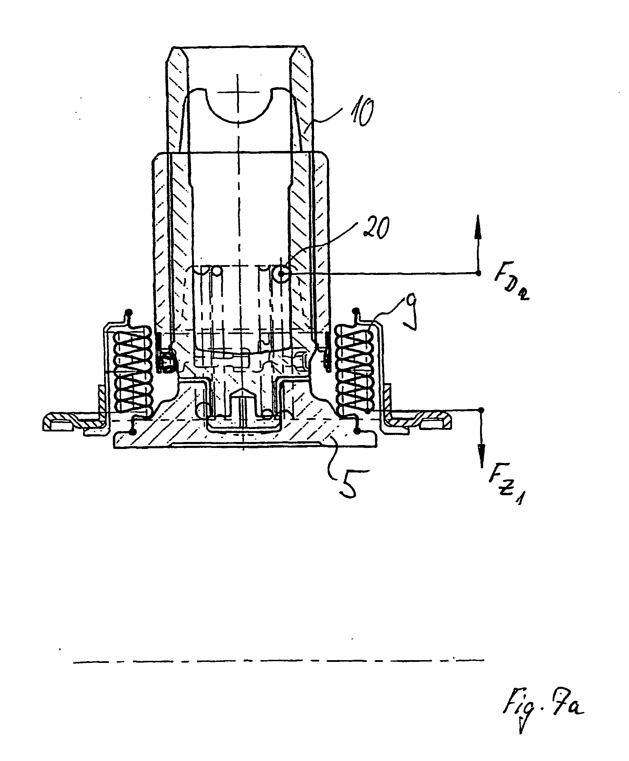

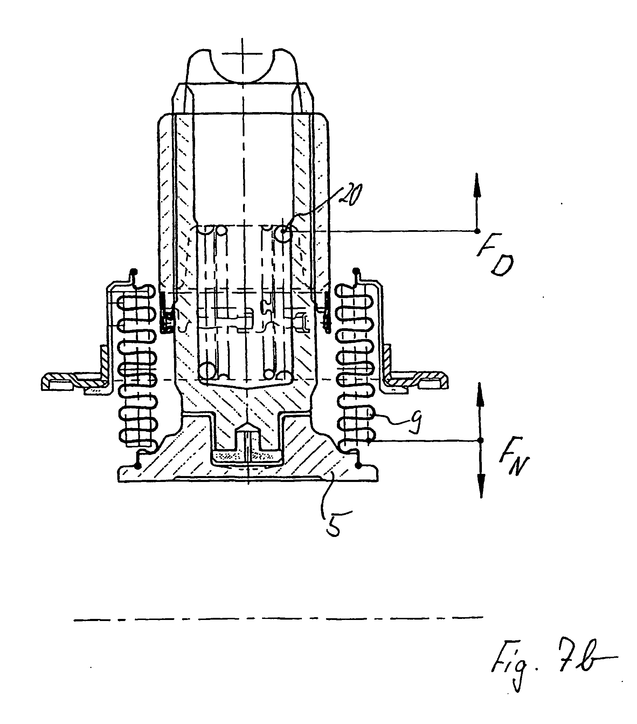

Zum Ausgleich eines Lüftspiels ist jeder Stellspindel 10 bzw. jedem Druckstück 5 Stellspindel 10 zum Nachstellen des Belagverschleißes zugeordnet, von denen eine mit einem mit dem Drehhebel gekoppelten Nachsteller 6 versehen ist. Die beiden Stellspindeln 10 sind hier mittels einer Kette 23 synchronisiert (siehe auch Fig. 6).

Der Bremssattel 1 ist auf seiner der Bremsscheibe 3 zugewandten Seite weitgehend durch eine Verschlußplatte 7 verschlossen, die im Bereich des Durchtritts der Stellspindel 10 durchbrochen ist.

Hier sind jeweils sich in das Innere des Bremssattels 1 erstreckende Töpfe 8 mit der Verschlußplatte 7 verbunden, die wiederum ein Befestigungselement für jeweils einen Balg 9 bilden, der andererseits an dem zugeordneten Druckstück 5 angeschlossen ist.

Wenn auf der der Zuspanneinrichtung 2 gegenüberliegenden Seite ebenfalls wenigstens ein Druckstück 5 vorgesehen sind, können diese ebenfalls jeweils durch einen erfindungsgemäßen Balg 9 aus einem durchgehenden Blech gegenüber dem Bremssattel 1 abgedichtet sein.

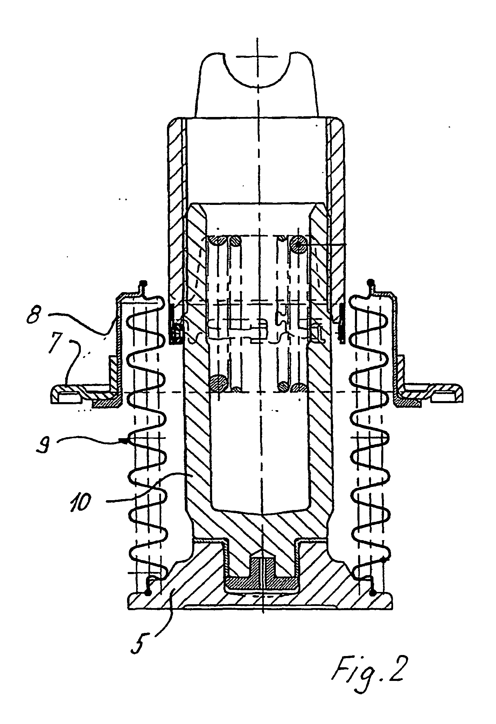

Im gezeigten Ausführungsbeispiel entsprechend den Figuren 1 und 2 ist der Balg 9, der die Stellspindel 10 konzentrisch umhüllt, als Faltenbalg in Form eines Wellenbalges ausgebildet, wobei er aus einem thermisch und/oder mechanisch hoch belastbaren Material, vorzugsweise Metall, besteht.

Durch den Balg 9 ist eine hermetische Abdichtung sowohl des Inneren des Bremssattels 1 wie auch der Stellspindel 10 sowie der zugeordneten Nachstelleinrichtung 6 gewährleistet.

Wie bereits erwähnt, ist der Faltenbalg 9 aus einem nichtrostenden Metall gebildet, z. B. aus einem nichtrostenden Stahl, einem Leichtmetall oder dergleichen. Denkbar ist auch, ein Metallblech durchgehender Art.

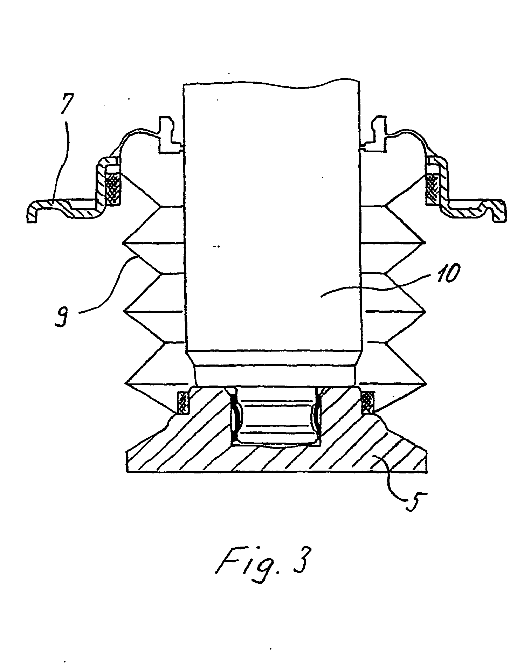

Während der in der Figur 2 gezeigte Balg 9 als Wellenbalg ausgebildet ist, ist bei dem in der Figur 3 gezeigten Ausführungsbeispiel der Balg 9 als Lamellen- oder Membranbalg gestaltet.

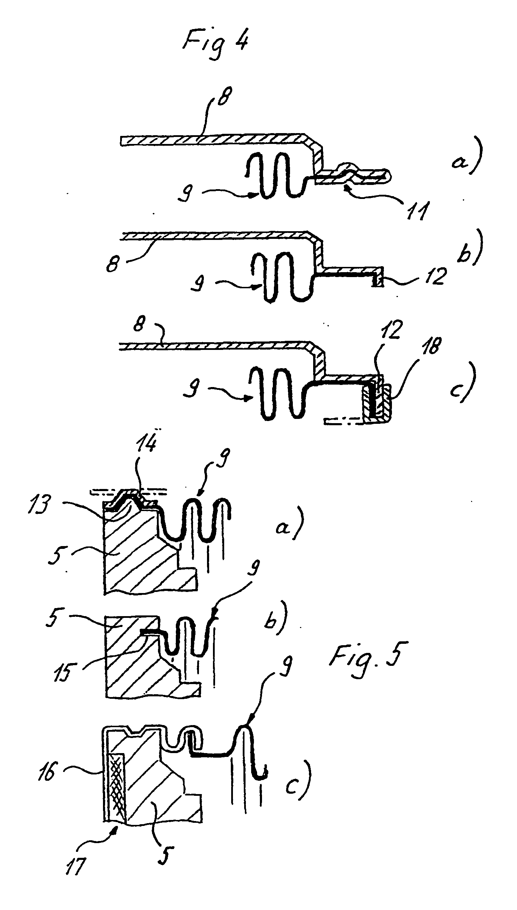

In den Figuren 4a bis 4c sind unterschiedliche Arten der Befestigung des Balges 9 mit der Verschlußplatte 7 bzw. des daran befestigten Topfes 8 dargestellt, für welche eine Ringnut 23 in die Traverse eingebracht ist.

So ist in der Figur 4a zu erkennen, daß der dem Druckstück 5 abgewandte Rand des Balges 9 mit dem Topfende durch Umbördelung verbunden ist, wobei eine im Bördelbereich eingerollte Nut 11 eine Verbindung schafft, die hohe Zug- und Druckkräfte aufnehmen kann.

In der Figur 4b ist zu erkennen, daß das Ende des Balges 9 radial zentriert und hart verlötet mit dem Rand des Topfes 8 ist, wobei zur axialen Positionierung des Balges 9 am äußeren Rand des Topfes 8 ein Anschlag 12 vorgesehen ist, der sich radial nach innen erstreckt und an dem sich das entsprechend geformte Ende des Balges 9 abstützt.

Eine radiale Zentrierung des Balgendes ist ebenfalls in der Figur 4c zu erkennen. Auch hier ist eine einseitige axiale Sicherung des Balges 9 durch den Anschlag 12 gegeben, während die Befestigung am Topf 8 durch eine Bundbuchse 18 erfolgt, die auf den Anschlag 12 und den daran anliegenden, entsprechend geformten Rand des Balges 9 aufgeschoben und anschließend umgebördelt ist.

Die gezeigten Verbindungsmöglichkeiten beschränken sich nicht auf den Einsatz eines Topfes 8, sondern sind auch durchführbar, wenn die Verbindung unmittelbar an der Verschlußplatte 7 erfolgt.

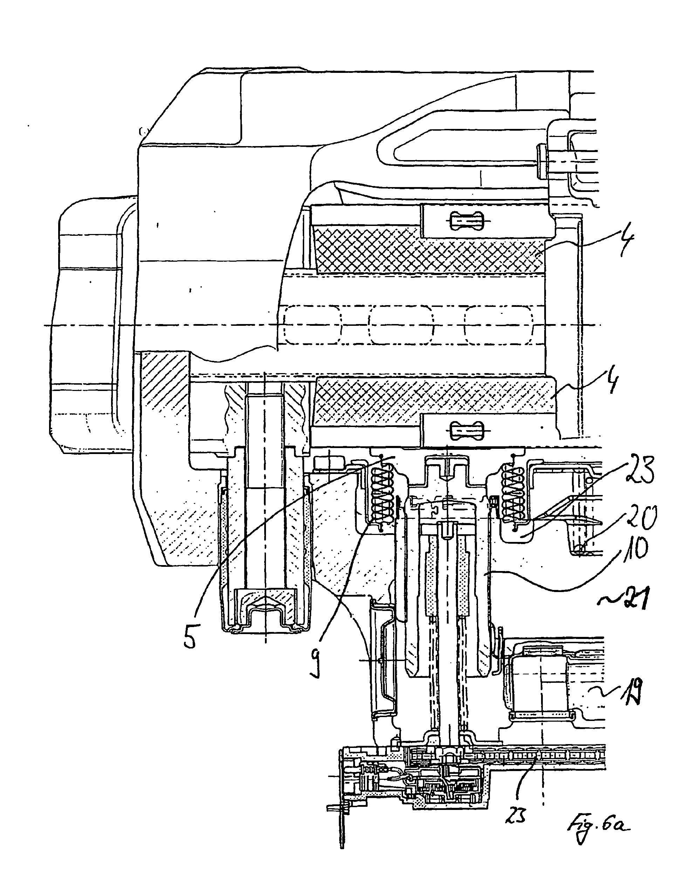

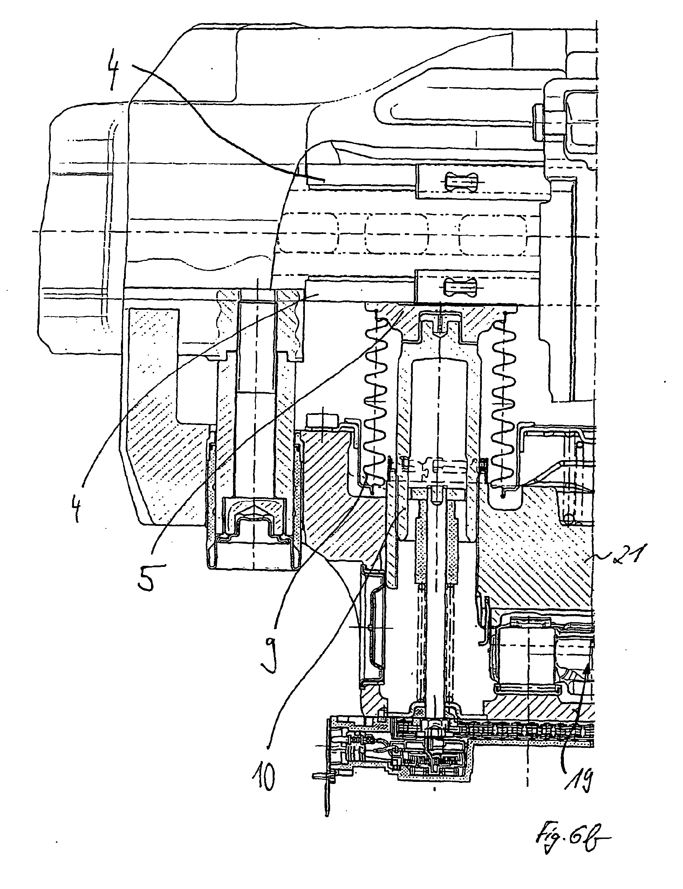

Die Figuren 5a bis 5c schließlich zeigen verschiedene Möglichkeiten der Verbindung /Kopplung des Balges 9 mit dem Druckstück 5.

So ist gemäß der Figur 5a die Verbindung dadurch geschaffen, daß der dem Druckstück 5 zugewandte Randbereich des Balges 9 auf der Umfangsfläche des Druckstücks 5 aufliegt, die einen etwa keilförmigen umlaufenden Steg aufweist, der als Matrize dient für einen auf den Randbereich des Balges 9 aufgeschobenen Ring 14, der anschließend durch Verquetschen entsprechend der Form des Steges 13 eine formschlüssige Verbindung herstellt.

Im Beispiel nach Figur 5b weist das Druckstück 5 auf der dem Balg 9 zugewandten Seite einen konzentrischen Ringspalt 15 auf, in den der Rand des Balges 9 eingesteckt und durch Verstemmen, Verlöten oder andere Befestigungsarten an dem Druckstück 5 angeschlossen wird.

In der Figur 5c ist zu erkennen, daß der dem Druckstück 5 zugewandte Rand des Balges 9 mit einem Anschlußblech 16 durch Bördelung verbunden ist, wobei das Anschlußblech 16 Bestandteil einer thermischen Isolierung 17 ist, die fest mit dem Druckstück 5 verbunden ist und durch die ein thermischer Schutz der entsprechenden Bauteile der Scheibenbremse erreicht wird.

Metallfaltenbälge sind zwar an sich bekannt. An den Einsatz eines Metallfaltenbalges bei Nutzfahrzeugbremsen wurde jedoch bisher nicht angedacht, vermutlich, da man glaubte, dass das Drehmoment, welches der metallische Faltenbalg 9 aufgrund seiner Federwirkung auf die Stellspindeln 10 ausübt, diesem Einsatz entgegensteht, insbesondere, da sich die Federwirkung und damit das Drehmoment mit zunehmendem Belagverschleiß und zunehmendem Ausfahren des Faltenbalges 9 laufend verändern.

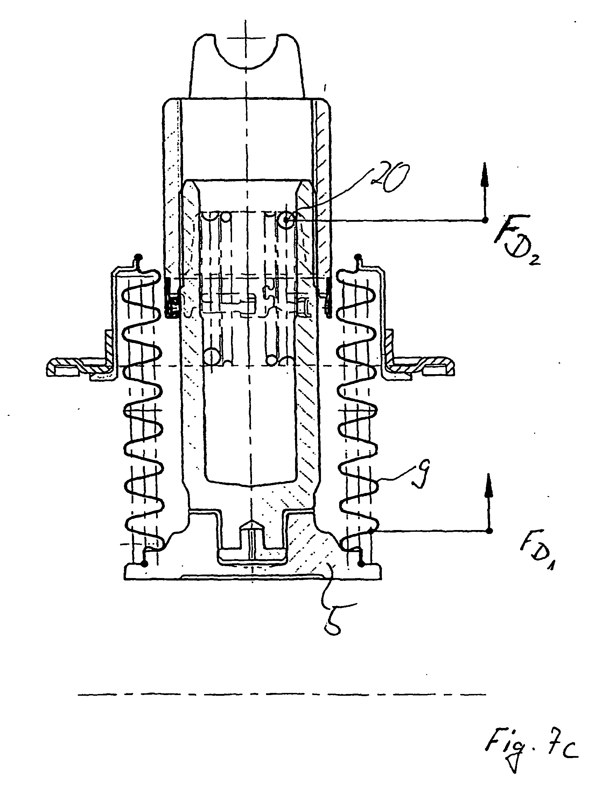

Den Effekt veranschaulichen prinzipiell die Fig. 6 und 7. Fig. 7a zeigt den Zustand mit unverschlissenen Bremsbelägen 4, in welchem der Faltenbalg 9 als Druckfeder zwischen dem Bremssattel und den Druckstücken bzw. auf die Druckstücke wirkt, z.B. mit einem beispielhaften Wert A von ca. 350 N. Am Ende - bei vollständig verschlissenen Bremsbelägen 4 wirkt er dagegen, sozusagen im "vollständig ausgefahrenen Zustand", als Zugfeder zwischen Bremssattel 1 und Druckstücken 5, z.B. mit einem beispielhaften Wert B von ca. 210 N (Fig. 7c). Irgendwo in der Mitte zwischen diese Stellungen übt er keine Federwirkung aus, d.h., seine Wirkung ist neutral (0 N; Fig. 7b). Daneben wirkt jeweils z.B. jeweils mit ca. 1000 N F_{D}(2), d.h. die Kraft der Brückenfeder(n) 20, d.h. deren Kraft und die Kräfte der zwei Faltenbälge addieren sich jeweils entsprechend. Eine derartige Auslegung behindert die Nachstellfunktion der Bremse nicht in praktisch erheblichem Ausmaß und schützt das Bremssattelinnere, d.h. insbesondere die hier drehhebelbetätigte Zuspanneinrichtung mit exzentrische Drehhebelanordnung und Brücke 21.

Es ist alternativ auch denkbar, den Faltenbalg durch gängig in Hinsicht auf die Druckstücke als reine Zugfeder auszulegen, wenn dieser entsprechend komprimiert aufgebaut ist.

### Bezugszeichenliste

- 1: Bremssattel
- 2: Zuspannvorrichtung
- 3: Bremsscheibe
- 4: Bremsbelag
- 5: Druckstück
- 6: Nachsteller
- 7: Verschlussplatte
- 8: Topf
- 9: Balg
- 10: Stellspindel
- 11: Nut
- 12: Anschlag
- 13: Steg
- 14: Ring
- 15: Ringspalt
- 16: Anschlußblech
- 17: Isolierung
- 18: Bundbuchse
- 19: Drehhebel
- 20: Brückenfeder(n)
- 21: Brücke
- 22: Kette
- 23: Ringausnehmung

## Patentansprüche

1. Pneumatisch oder elektromotorisch betätigbare Scheibenbremse für ein Nutzfahrzeug, mit einem eine Bremsscheibe (3) übergreifenden Bremssattel (1) und mindestens einer Zuspanneinrichtung (2) zum Zuspannen der Scheibenbremse, wobei die Zuspanneinrichtung (2) auf ihrer der Bremsscheibe (3) zugewandten Seite zumindest ein Druckstück (5) aufweist, das gegenüber dem Bremssattel (1) oder einem mit dem Bremssattel verbundenen Teil durch einen vorzugsweise an diesem und am Druckstück (5) angeschlossenen, verformbaren Balg (9) abgedichtet ist, **dadurch gekennzeichnet, daß** der Balg (9) aus Metall besteht.

2. Scheibenbremse nach Anspruch 1, **dadurch gekennzeichnet, daß** der Balg (9) aus einem nicht rostenden Metall, vorzugsweise einem nicht rostenden Stahl oder Leichtmetall besteht.

3. Scheibenbremse nach einem der Ansprüche 1 bis 2, **dadurch gekennzeichnet, daß** der Balg (9) aus einem durchgehenden Metallblech besteht.

4. Scheibenbremse nach einem oder mehreren der vorhergehenden Ansprüche, **dadurch gekennzeichnet, daß** der Balg (9) als Faltenbalg ausgebildet ist.

5. Scheibenbremse nach einem oder mehreren der vorhergehenden Ansprüche, **dadurch gekennzeichnet, daß** der Faltenbalg (9) als Lamellen- oder Wellenbalg ausgebildet ist.

6. Scheibenbremse nach einem oder mehreren der vorhergehenden Ansprüche, **dadurch gekennzeichnet, daß** der Faltenbalg (9) derart ausgelegt ist, dass das durch Gewindehaltemoment, welches er auf die wenigstens eine Stellspindel (10) ausübt, so gering ist, dass die Nachstellfunktion des Nachstellers durch Verdrehen der Stellspindeln (10) gewährleistet bleibt.

7. Scheibenbremse nach einem oder mehreren der vorhergehenden Ansprüche, **dadurch gekennzeichnet, daß** die Federkraft des Faltenbalges (9) oder der zwei Faltenbälge zwischen Druckstück (5) und Bremssattel (1) der Zuspannvorrichtung in jedem Betriebszustand kleiner als 1000 N, insbesondere kleiner als 800 N ist.

8. Scheibenbremse nach einem oder mehreren der vorhergehenden Ansprüche, **dadurch gekennzeichnet, daß** der Faltenbalg (9) derart ausgelegt ist, dass er bei unverschlissenen Bremsbelägen (4) als Druckfeder und bei verschlissenen Bremsbelägen als Zugfeder auf die Druckspindeln wirkt.

9. Scheibenbremse nach einem oder mehreren der vorhergehenden Ansprüche, **dadurch gekennzeichnet, daß** der Faltenbalg (9) derart ausgelegt ist, dass er bei unverschlissenen Bremsbelägen (4) und bei verschlissenen Bremsbelägen als Zugfeder auf die Druckspindeln wirkt.

10. Scheibenbremse nach einem oder mehreren der vorhergehenden Ansprüche, **dadurch gekennzeichnet, daß** der Faltenbalg (9) derart ausgelegt ist, dass er bei unverschlissenen Bremsbelägen (4) und bei verschlissenen Bremsbelägen als Druckfeder auf die Druckspindeln wirkt.

11. Scheibenbremse nach einem oder mehreren der vorhergehenden Ansprüche, **dadurch gekennzeichnet, daß** der Balg (9) stoffschlüssig mit dem Druckstück (5) und/oder dem Bremssattel (1) bzw. daran angeschlossenen Teilen verbunden ist.

12. Scheibenbremse nach Anspruch 9, **dadurch gekennzeichnet, daß** der Balg (9) durch Schweißen, Löten, vorzugsweise Hartlöten mit dem Druckstück (5) und/oder dem Bremssattel (1) verbunden ist.

13. Scheibenbremse nach einem der vorhergehenden Ansprüche, **dadurch gekennzeichnet, daß** der Balg (9) form- und/oder kraftschlüssig mit dem Druckstück (5) und/oder dem Bremssattel (1) verbunden ist.

14. Scheibenbremse nach Anspruch 11, **dadurch gekennzeichnet, daß** der Form- und/oder Kraftschluß durch Rollieren, Quetschen oder Verpressen hergestellt ist.

15. Scheibenbremse nach einem der vorhergehenden Ansprüche, **dadurch gekennzeichnet, daß** zum Verpressen ein über den äußeren Randbereich des Balges (9) im Verbindungsbereich mit dem Druckstück (5) bzw. dem Bremssattel (1) ein Ring (14) vorgesehen ist, der unter Einschluß des Randbereiches des Balges (9) gegen eine Konturierung, vorzugsweise einen Steg (13) des Druckstückes (5) oder des Bremssattels (1), verpreßt ist.

16. Scheibenbremse nach einem der vorhergehenden Ansprüche, **dadurch gekennzeichnet, daß** der Balg (9) im Bereich des Druckstückes mit einem Anschlußblech (16) verbunden ist, das Bestandteil einer thermischen Isolierung (17) ist, die das Druckstück (5) überdeckt.

17. Scheibenbremse nach einem der vorhergehenden Ansprüche, bei welcher der Bremssattel (1) auf seiner der Bremsscheibe (3) zugewandten Seite durch eine Verschlussplatte (7) verschlossen ist, **dadurch gekennzeichnet, daß** die Verschlussplatte jedem Balg (9) zugeordnet einen Topf (8) aufweist, der den Balg (9) konzentrisch und über einen Teil seiner Länge umschließt, wobei der Balg (9) fest mit dem Topf (8) verbunden ist.

18. Scheibenbremse nach einem der vorhergehenden Ansprüche, **dadurch gekennzeichnet, daß** das dem Druckstück (5) abgewandte Ende des Topfes (8) eine den zugeordneten Randbereich des Balges (9) einschließende Umbördelung aufweist, in die eine Nut (11) eingedrückt ist.

19. Scheibenbremse nach einem der vorhergehenden Ansprüche, **dadurch gekennzeichnet, daß** der dem Druckstück (5) abgewandte Randbereich des Balges (9) axial gesichert an einem Anschlag (12) des Topfes (8) anliegt.

20. Scheibenbremse nach einem der vorhergehenden Ansprüche, **dadurch gekennzeichnet, daß** der Topf (8) am Bremssattel oder an einem mit dem Bremssattel verbundenen Teil arretiert ist.

21. Scheibenbremse nach einem der vorhergehenden Ansprüche, **dadurch gekennzeichnet, daß** der Topf (8) in eine Ringausnehmung einer Traverse der+ Zuspanneinrichtung hineinragt.

22. Scheibenbremse nach einem der vorhergehenden Ansprüche, **dadurch gekennzeichnet, daß** der Balg (9) durch eine auf das dem Druckstück (5) abgewandte Ende des Topfes (8) aufgeschobene und unter Einklemmung des Randes des Balges (9) umgebogene Bundbuchse (18) gehalten ist.

23. Scheibenbremse nach einem der vorhergehenden Ansprüche, **dadurch gekennzeichnet, daß** auf der der Zuspanneinrichtung (2) gegenüberliegenden Seite mindestens ein Druckstück (5) vorgesehen ist, das durch einen der Bälge (9) gegenüber dem Bremssattel (1) abgedichtet ist.

24. Scheibenbremse nach einem der vorhergehenden Ansprüche, **dadurch gekennzeichnet, daß** der Balg (9) in seiner Ausgangsstellung bei unverschlissenen Bremsbelägen einen zumindest teilweise aufgrollten Mantel aufweist, derart, dass mit zunehmendem Belagverschleiß der aufgerollte Bereich der Faltenbalges nach und nach aus dem aufgrollten Bereich heraus streckbar ist.

25. Scheibenbremse nach einem der vorhergehenden Ansprüche, **dadurch gekennzeichnet, daß** der Balg (9) wenigstens eine oder mehrere Federwirkung gewährleistende Wellung(en) oder Faltung(en) aufweist.

## Claims

1. Pneumatically or electromotively operable disc brake for a commercial vehicle, with a brake caliper (1) extending round a brake disc (3) and at least one brake application device (2) for applying the brake disc, which brake application device (2) has at least one pressure piece (5) on its side facing the brake disc (3), which is sealed with respect to the brake caliper (1) or a part connected to the brake caliper by means of a deformable bellows (9) which is preferably connected to it and to the pressure piece (5), **characterised in that** the bellows (9) is made from metal.

2. Disc brake as claimed in claim 1, **characterised in that** the bellows (9) is made from a non-rusting metal, preferably a stainless steel or light alloy.

3. Disc brake as claimed in one of claims 1 to 2, **characterised in that** the bellows (9) is made from a continuous sheet metal.

4. Disc brake as claimed in one or more of the preceding claims, **characterised in that** the bellows (9) is a folding bellows.

5. Disc brake as claimed in one or more of the preceding claims, **characterised in that** the folding bellows (9) is a lamellar or fluted bellows.

6. Disc brake as claimed in one or more of the preceding claims, **characterised in that** the folding bellows (9) is designed so that the thread retaining torque which it exerts on the at least one adjusting spindle (10) is so low that the adjusting function of the adjuster operated by turning the adjusting spindles (10) is preserved.

7. Disc brake as claimed in one or more of the preceding claims, **characterised in that** the spring force of the folding bellows (9) or the two folding bellows between the pressure piece (5) and brake caliper (1) of the brake application device is less than 1000 N, in particular less than 800 N, in every operating state.

8. Disc brake as claimed in one or more of the preceding claims, **characterised in that** the folding bellows (9) is designed so that it acts on the pressure spindles as a compression spring when the brake linings (4) are not worn and acts as a tension spring when the brake linings are worn.

9. Disc brake as claimed in one or more of the preceding claims, **characterised in that** the folding bellows (9) is designed so that it acts on the pressure spindles as a tension spring when the brake linings (4) are not worn and when the brake linings are worn.

10. Disc brake as claimed in one or more of the preceding claims, **characterised in that** the folding bellows (9) is designed so that it acts on the pressure spindles as a compression spring when the brake linings (4) are not worn and when the brake linings are worn.

11. Disc brake as claimed in one or more of the preceding claims, **characterised in that** the bellows (9) is connected to the pressure piece (5) and/or to the brake caliper (1) or a part connected to it by means of a material join.

12. Disc brake as claimed in claim 9, **characterised in that** the bellows (9) is connected to the pressure piece (5) and/or to the brake caliper (1) by welding, soldering and preferably by brazing.

13. Disc brake as claimed in one of the preceding claims, **characterised in that** the bellows (9) is positively and/or non-positively connected to the pressure piece (5) and/or the brake caliper (1).

14. Brake disc as claimed in claim 11, **characterised in that** the positive and/or non-positive connection is established by means of rolling, crimping or compressing.

15. Disc brake as claimed in one of the preceding claims, **characterised in that** a ring (14) is provided in the connecting region around the outer peripheral region of the bellows (9) for compressing with the pressure piece (5) or the brake caliper (1), which is compressed against a contoured region, preferably a web (13) of the pressure piece (5) or the brake caliper (1), incorporating the peripheral region of the bellows (9).

16. Disc brake as claimed in one of the preceding claims, **characterised in that** the bellows (9) is connected to a connecting plate (16) in the region of the pressure piece, which is an integral element of a thermal isolation (17) covering the pressure piece (5).

17. Brake disc as claimed in one of the preceding claims, in which the brake caliper (1) is closed by means of a closure plate (7) at its side facing the brake disc (3), **characterised in that** the closure plate has a pot (8) co-operating with each bellows (9) which surrounds the bellows (9) concentrically and across a part of its length, and the bellows (9) is fixedly connected to the pot (8).

18. Disc brake as claimed in one of the preceding claims, **characterised in that** the end of the pot (8) remote from the pressure piece (5) has a beaded region enclosing the co-operating peripheral region of the bellows (9) into which a groove (11) is imprinted.

19. Disc brake as claimed in one of the preceding claims, **characterised in that** the peripheral region of the bellows (9) remote from the pressure piece (5) lies axially secured against a stop (12) of the pot (8).

20. Disc brake as claimed in one of the preceding claims, **characterised in that** the pot (8) is locked on the brake caliper or on a part connected to the brake caliper.

21. Disc brake as claimed in one of the preceding claims, **characterised in that** the pot (8) extends through a cross-piece of the brake application device into an annular recess.

22. Disc brake as claimed in one of the preceding claims, **characterised in that** the bellows (9) is retained by means of a bent-round connecting bush (18) pushed onto the end of the pot (8) remote from the pressure piece (5) which clamps the edge of the bellows (9).

23. Disc brake as claimed in one of the preceding claims, **characterised in that** at least one pressure piece (5) is provided on the side lying opposite the brake application device (2), which is sealed with respect to the brake caliper (1) by means of one of the bellows (9).

24. Disc brake as claimed in one of the preceding claims, **characterised in that** the bellows (9) has an at least partially rolled-up casing in its initial position when the brake linings are not worn and the rolled-up region of the folding bellows can be gradually extended out from the rolled-up region as wear of the linings increases.

25. Disc brake as claimed in one of the preceding claims, **characterised in that** the bellows (9) has at least one or more flute(s) or fold(s) affording the spring action.

## Revendications

1. Frein à disque à commande pneumatique ou électromotrice pour un véhicule utilitaire, comprenant un étrier de frein (1) chevauchant un disque de frein (3) et au moins un moyen à serrer le frein (2) afin d'appliquer le frein à disque, dans lequel ledit moyen à serrer le frein (2) comprend, de son côté en face dudit disque de frein (3), au moins un élément presseur (5), qui est rendu étanche relativement audit étrier de frein (1) ou une partie reliée audit étrier de frein moyennant un soufflet déformable (9), qui est raccordé, de préférence, à cette partie ou audit élément presseur (5), **caractérisé en ce que** ledit soufflet (9) est fait en métal.

2. Frein à disque selon la revendication 1, **caractérisé en ce que** ledit soufflet (9) est fait en un métal non corrosif, de préférence en un acier non corrosif ou en un métal léger.

3. Frein à disque selon une quelconque des revendications 1 à 2, **caractérisé en ce que** ledit soufflet (9) consiste en un tôle métallique en continu.

4. Frein à disque selon une ou plusieurs des revendications précédentes, **caractérisé en ce que** ledit soufflet (9) est configuré sous forme d'un soufflet plié.

5. Frein à disque selon une ou plusieurs des revendications précédentes, **caractérisé en ce que** ledit soufflet plié (9) est configuré sous forme d'un soufflet lamellaire ou soufflet ondulé.

6. Frein à disque selon une ou plusieurs des revendications précédentes, **caractérisé en ce que** ledit soufflet plié (9) est configuré d'une telle manière, que le moment de retenu du filetage, auquel il agit sur l'au moins une broche de réglage (10), est si faible, que la fonction de réglage de l'ajusteur par la rotation des tiges de réglage (10) soit assurée.

7. Frein à disque selon une ou plusieurs des revendications précédentes, **caractérisé en ce que** l'effort de ressort dudit soufflet plié (9) ou de deux soufflet pliés entre ledit élément presseur (5) et ledit étrier de frein (1) dudit moyen à serrer le frein est inférieur à 1000 N, en particulier inférieur à 800 N, en tout état de service quelconque.

8. Frein à disque selon une ou plusieurs des revendications précédentes, **caractérisé en ce que** ledit soufflet plié (9) est conçu d'une telle manière, qu'il agisse sur lesdites tiges de pression en tant que ressort de pression au cas des garnitures de frein (4) non usées par abrasion et en tant que ressort de traction au cas des garnitures de frein usées par abrasion.

9. Frein à disque selon une ou plusieurs des revendications précédentes, **caractérisé en ce que** ledit soufflet plié (9) est conçu d'une telle manière, qu'il agit sur lesdites tiges de pression en tant que ressort de traction au cas des garnitures de frein usées par abrasion et au cas de garnitures de frein non usées par abrasion.

10. Frein à disque selon une ou plusieurs des revendications précédentes, **caractérisé en ce qu'**il agit sur lesdites tiges de pression en tant que ressort de pression au cas des garnitures de frein usées par abrasion et au cas de garnitures de frein non usées par abrasion.

11. Frein à disque selon une ou plusieurs des revendications précédentes, **caractérisé en ce que** ledit soufflet (9) est conçu d'une telle manière, est relié audit élément presseur (5) et/ou audit étrier de frein (1) ou respectivement aux parties y raccordés par engagement par matériau.

12. Frein à disque selon la revendication 9, **caractérisé en ce que** ledit soufflet (9) est raccordé audit élément presseur (5) et/ou audit étrier de frein (1) par soudage, brasage, de préférence brasure.

13. Frein à disque selon une quelconque des revendications précédentes, **caractérisé en ce que** ledit soufflet (9) est raccordé audit élément presseur (5) et/ou audit étrier de frein (1) d'une manière positive et/ou par friction.

14. Frein à disque selon la revendication 11, **caractérisé en ce que** ledit engagement positif et/ou par friction est établi par roulage, sertissage ou pressage.

15. Frein à disque selon une quelconque des revendications précédentes, **caractérisé en ce qu'**un anneau (14) est disposé pour le pressage, qui s'étend au-delà la zone extérieur de bord dudit soufflet (9) dans la zone de raccord audit élément presseur (5) ou respectivement audit étrier de frein, cette bague étant pressée contre un élément de contour, de préférence un une bride (13) dudit élément presseur (5) ou dudit étrier de frein (1), en renferment ladite zone de bord dudit soufflet (9).

16. Frein à disque selon une quelconque des revendications précédentes, **caractérisé en ce que** dans la région dudit élément presseur, ledit soufflet (9) est relié à un tôle de raccord (16), qui constitue une partie d'un isolement thermique (17) chevauchant ledit élément presseur (5).

17. Frein à disque selon une quelconque des revendications précédentes, dans lequel ledit étrier de frein (1), de son côté en face de ladite disque de frein (3), par une plaque de fermeture (7), **caractérisé en ce que** ladite plaque de fermeture comprend un godet (8) affecté à chaque soufflet (9), qui entoure ledit soufflet (9) de façon concentrique et sur une partie de la longueur du dernier, audit soufflet (9) étant raccordé, de manière fixe, audit godet (8).

18. Frein à disque selon une quelconque des revendications précédentes, **caractérisé en ce que** l'extrémité dudit godet (8), qui est opposée audit élément presseur (5), comprend une zone à bord rabattu, renfermant la zone de bord affectée dudit soufflet (9).

19. Frein à disque selon une quelconque des revendications précédentes, **caractérisé en ce que** ladite zone de bord dudit soufflet (9), qui est opposée audit élément presseur (5), porte contre un mentonnet 1 dudit godet (8), en étant verrouillé en sens axial.

20. Frein à disque selon une quelconque des revendications précédentes, **caractérisé en ce que** ledit godet (8) est arrêté audit étrier de frein ou à un élément relié audit étrier de frein.

21. Frein à disque selon une quelconque des revendications précédentes, **caractérisé en ce que** ledit godet s'étend à l'intérieur d'un creux annulaire d'une traverse dudit moyen d'application du frein.

22. Frein à disque selon une quelconque des revendications précédentes, **caractérisé en ce que** ledit soufflet est retenu par une douille à collet (18) poussée sur l'extrémité dudit godet (8), qui est opposée audit élément presseur (5), cette douille à collet étant pliée en serrant le bord dudit soufflet (9).

23. Frein à disque selon une quelconque des revendications précédentes, **caractérisé en ce que** du côté opposé audit moyen d'application du frein (2), au moins un élément presseur (5) est disposé, qui est rendu étanche par un desdits soufflet (9) relativement audit étrier de frein (1).

24. Frein à disque selon une quelconque des revendications précédentes, **caractérisé en ce qu'**au cas des garnitures de frein non usées par abrasion, ledit soufflet (9), en son position initiale, présente une enveloppe enroulée, au moins en partie, d'une telle manière, que la zone enroulée dudit soufflet peut s'étendre progressivement en dehors de la zone enroulée selon le progrès de l'usure de la garniture.

25. Frein à disque selon une quelconque des revendications précédentes, **caractérisé en ce que** ledit soufflet (9) présente au moins une ou plusieurs ondulation(s) ou pliage(s) assurant ledit effet de ressort.
